# EUROPÄISCHE PATENTSCHRIFT

(11) **EP 3 090 883 B1**
(45) Veröffentlichungstag und Bekanntmachung des Hinweises auf die Patenterteilung: **22.08.2018**
(21) Anmeldenummer: 16167916.2
(22) Anmeldetag: 02.05.2016
(51) Int. Cl.: B44C 5/04, B44F 9/04, C04B 14/00, B28B 1/00, E04F 13/08

(54) **VERFAHREN ZUR HERSTELLUNG DEKORATIVER LAMINATE**
METHOD FOR MANUFACTURING DECORATIVE LAMINATES
PROCÉDÉ DE FABRICATION DE STRATIFIÉS DÉCORATIFS

(30) Priorität: 08.05.2015 DE 102015107184; 07.08.2015 DE 102015113043
(43) Veröffentlichungstag der Anmeldung: 09.11.2016
(73) Patentinhaber: Sandstein Concept GmbH & Co. KG, 01445 Radebeul (DE)
(72) Erfinder: Enrico, Kretzschmar, 01445 Radebeul (DE)
(74) Vertreter: Kaufmann, Sigfrid

(56) Entgegenhaltungen:
- WO-A1-2016/028780
- DE-A1- 2 330 005
- US-A- 1 570 538

## Beschreibung

Die Erfindung betrifft ein Verfahren zur Herstellung dekorativer Laminate mit schichtartiger, das optische Erscheinungsbild natürlicher Sediment- oder Steinformationen nachahmender Strukturierung aus verfestigten anorganischen Partikeln, wobei die Strukturierung durch künstliche Schüttung der Partikel erreicht wird.

Die Herstellung von Laminaten, bestehend aus einem Trägermaterial mit einem darauf fixierten Partikelbelag aus Sedimentpartikeln, ist als Technik des Lackabzugs bzw. als Lackfilmmethode bekannt. Diese Methode umfasst die Konservierung von schichtartig strukturierten, geologischen Formationen in lockeren Sedimenten mit Hilfe von Kunstharzen oder Lacken, wobei die schichtartige Strukturierung der Sedimentformation herauspräpariert und auf dem Trägermaterial fixiert wird. Das Kunstharz oder der Lack, im Weiteren allgemein als Haftvermittler bezeichnet, infiltriert die Sedimentformation in einem vorgegebenen Oberflächenabstand, härtet anschließend aus und die Partikel des Sediments haften am Trägermaterial. Das Laminat wird durch Abziehen des auf dem Trägermaterial haftenden, schichtartig strukturierten Partikelbelages hergestellt.

In EP 1 268 954 B1 ist die Anwendung der Lackfilmmethode zur Erzeugung dekorativer Laminate aus natürlichen Sedimentformationen beschrieben. Es ist ein Verfahrens offenbart, welches direkt in der Sand- oder Kiesgrube zur Anwendung kommt bzw. als Alternative, nach Verbringung von unveränderten, aus Sand- oder Kiesgruben entnommen Sedimentblöcken, in einen Werkhallenbereich. Beide Verfahren verwenden ausschließlich eine natürliche Sedimentformation als Ausgangsmaterial und sind daher auf diese in der jeweiligen Sand- oder Kiesgrube vorhandene Sedimentformation beschränkt.

EP 1 268 954 B1 beschreibt auch die Möglichkeit der künstlichen Mischung loser Sande zur Herstellung der Laminate. Dabei wird eine Sandschüttung aus losen Sanden erzeugt und die Laminate werden mittels der Lackfilmmethode direkt an der so erstellten Sandschüttung hergestellt. Im Unterschied zu den natürlichen Sedimentformationen weist die Sandschüttung jedoch keine Eigenfestigkeit auf. Dies ist nachteilig, da die Partikel der Sande ungleichmäßig am Trägermaterial anhaften und folglich keine Laminate mit gleichmäßiger Partikelbelagdicke und -haftung entstehen. Darüber hinaus sind bei künstlicher Mischung der losen Sande mit den in EP 1 268 954 B1 offenbarten Methoden und Vorrichtungen Laminate, die das optische Erscheinungsbild einer natürlichen, schichtartig strukturierten Sedimentformation aufweisen, nicht herstellbar.

Die Herstellung künstlicher Natursteinimitate als Laminat wird in GB 1 162 991 A beschrieben, wobei die beschriebene Methode es nicht ermöglicht, Laminate mit einer schichtartigen Strukturierung, wie sie bei natürlichen Sedimentformationen auftritt, zu erzeugen.

WO 2008 022 812 A offenbart die Herstellung eines flexiblen Laminats aus einem mehrlagigen Steinmaterial, dass auf einem Trägermaterial verklebt wird. Das optische Erscheinungsbild des Laminats ist dabei durch die natürliche Strukturierung des Steinmaterials vorgegeben und auf diese beschränkt.

In EP 2 437 925 B1 ist ein Verfahren zur künstlichen Herstellung von dekorativen Laminaten mittels Lackfilmmethode beschrieben, bei dem eine Sandschüttung erzeugt wird, und diese anschließend zu einem Grünkörper verfestigt wird. Die Strukturierung der Sandschüttung ist bei diesem Verfahren jedoch nicht vorgesehen. Vielmehr ist das Verfahren dadurch charakterisiert, dass die Strukturierung durch nachträgliche Erzeugung von Ausnehmungen im Grünkörper und Ausfüllen derselben mit Kontrastmitteln erreicht wird. Das Laminat wird mittels Lackfilmmethode an dem so präparierten Grünkörper hergestellt. Nachteilig bei dieser Methode ist, dass Laminate, die das optische Erscheinungsbild einer natürlichen, schichtartig strukturierten Sedimentformation aufweisen, nicht herstellbar sind.

Die Herstellung eines Laminats als Natursteinimitat wird des Weiteren in EP 2 360 025 A2 beschrieben, wobei das Laminat durch künstliches Mischen von fein granuliertem Naturstein mit Schmelzkleber und nachfolgendes Aufbringen auf ein Trägermaterial entsteht. Verfahrensbedingt ist für die erzeugten Produkte die Imitation natürlicher, schichtartiger Strukturierung nicht herstellbar.

Die im Stand der Technik beschriebenen Lösungen zur Herstellung von qualitativ hochwertigen Laminaten mit gleichmäßiger Partikelbelagdicke und -haftung und dem optischen Erscheinungsbild von natürlichen, schichtartig strukturierten Sediment- oder Steinformationen mittels Lackfilmmethode beschränken sich auf Verfahren, die als Ausgangsmaterial natürlich entstandene Sedimentformationen oder Gesteine nutzen. Das nachveröffentlichte Dokument WO 2016/028780 A1 offenbart ein Verfahren mit den Schritten a)-d) wie im vorliegenden Patentanspruch 1.

US 1,570,538 offenbart ein Verfahren umfassend das Anordnen einer Mehrzahl anorganischen Schichten in einer Aufnahmeform, und anschließenden Trocknen und Aushärten, so dass einen blockförmigen Grünkörper geformt wird. Der Grünkörper wird sodann in Platten geschnitten, wobei die Deckflächen eine schichtartige Strukturierung aufweisen. Aufgabe der Erfindung ist die Herstellung von Laminaten mit schichtartiger, das optische Erscheinungsbild natürlicher Sediment- oder Steinformationen nachahmender Strukturierung, die durch eine künstliche Schüttung von anorganischen Partikeln erzeugt wird, umfassend ein Trägermaterial und einen darauf fixierten Partikelbelag, der innerhalb jeder Schichtstruktur eine gleichmäßige Partikelbelagdicke und - haftung am Trägermaterial aufweist.

Die Aufgabe wird gemäß dem Verfahren zur Herstellung dekorativer Laminate mit den Merkmalen nach dem Patentanspruch 1 gelöst; vorteilhafte Weiterbildungen der Erfindung sind in den Unteransprüchen 2-14 beschrieben.

Erfindungsgemäß werden in einem ersten Schritt des Herstellverfahrens eine Mehrzahl von Mischungen, umfassend eine Vielzahl anorganischer Partikel und ein anorganisches, pulverförmiges, wasserabbindendes Bindemittel hergestellt. Das anorganische, pulverförmige, wasserabbindende Bindemittel wird im Folgenden als Bindemittel bezeichnet. Die für jede der verschiedenen Mischungen verwendeten Partikel unterscheiden sich jeweils in Farbe, Form und/oder Größe.

Im folgenden Schritt des Verfahrens werden die Mischungen in eine senkrecht aufgestellte, nach oben geöffnete, kastenförmige Aufnahmeform eingefüllt, wobei eine Schüttung erzeugt wird. Die Aufnahmeform ist derart gestaltet, dass deren eine Ausdehnung in horizontaler Richtung deutlich kürzer ist als die beiden anderen Ausdehnungen. Die erste Schichtstruktur der Schüttung entsteht dabei durch das Einfüllen der ersten Mischung. Anschließend wird die zweite Schichtstruktur der Schüttung durch das Einfüllen der zweiten Mischung erzeugt, die z. B. einen anderen Farbton aufweisen kann. Das Einfüllen weiterer Mischungen erfolgt in gleicher Weise bis die Aufnahmeform vollständig gefüllt ist. Durch diese Abfolge des Einfüllens verschiedener Mischungen wird in der Schüttung eine Vielzahl von Schichtstrukturen erzeugt, die in ihrer Gesamtheit die schichtartige Strukturierung bildet. Erfindungsgemäß ist die Schüttung durch Beimengung von Wasser befeuchtet.

Die Aufnahmeform, enthaltend die Schüttung, wird nach Abschluss des Einfüllvorganges an geeigneter Stelle, z. B. im Bereich einer Werkhalle oder in einem Regalsystem, gelagert. Während der Lagerzeit erfolgen eine Trocknung und eine Aushärtung der Schüttung zu einem plattenförmigen Grünkörper durch Abbindung des Bindemittels mit dem beigemengten Wasser. Beim Aushärten wird im Grünkörper ein offenporiger Verbund der anorganischen Partikel gebildet, wobei dieser Verbund durch eine Zugfestigkeit von 0,5 bis 10 MPa, d. h. in der Größenordnung von natürlich gewachsenen Sedimentformationen, und eine weitgehend gleichmäßige Bindung der anorganischen Partikel untereinander charakterisiert ist. Die beiden Deckflächen des plattenförmigen Grünkörpers weisen die schichtartige Strukturierung auf.

Die Aufnahmeform mit dem Grünkörper wird anschließend waagerecht so positioniert, dass eine der Deckflächen des Grünkörpers nach oben gerichtet ist. Die Deckplatte der Aufnahmeform, die die nach oben gerichtete Deckfläche des Grünkörpers abdeckt, wird entfernt, und die obere Deckfläche des Grünkörpers wird dadurch frei zugänglich.

Auf diese Deckfläche des Grünkörpers wird nach dessen Glättung ein bahnartiges Trägermaterial, z. B. ein Gewebe oder ein Vließ, aufgelegt und darauf ein flüssiger Haftvermittler durch Gießen, Tränken, Streichen, Rollen, Sprühen oder vergleichbare Verfahren aufgetragen. Dabei wird der Grünkörper in einem vorgegebenen Oberflächenabstand durch den Haftvermittler penetriert. Anschließend erfolgt die Aushärtung des Haftvermittlers, wobei sich ein am Trägermaterial anhaftender Partikelbelag bildet.

Im letzten Schritt des Verfahrens wird das Trägermaterial mit dem daran anhaftenden Partikelbelag vom Grünkörper abgehoben und dabei das Laminat gebildet.

Der Vorgang des Glättens, Aufbringens des Trägermaterials und des Haftvermittlers, die Aushärtung und das Abheben kann am Grünkörper mehrfach wiederholt werden, sodass eine Vielzahl von Laminatbahnen an ein und demselben Grünkörper erzeugt werden können.

Der Vorteil der Erfindung besteht darin, dass das Einbringen der Mehrzahl von Mischungen mit unterschiedlichen optischen Eigenschaften durch das Einfüllen in die Aufnahmeform derart durchgeführt werden kann, dass die schichtartige Strukturierung der entstandenen Schüttung und folglich des Laminats dem optischen Erscheinungsbild von natürlichen Sedimentformationen in Sand- oder Kiesgruben entspricht. Die künstliche Auswahl und die künstliche Einbringung der verwendeten Mischungen bieten darüber hinaus den Vorteil einer deutlichen Erweiterung der Farbgebung und der Akzentuierung in Bezug auf die optische Gestaltung des Laminats.

Ein weiterer Vorteil der Erfindung ist die Erzeugung des Grünkörpers mit der Zugfestigkeit 0,5 bis 10 MPa als Zwischenschritt im Verfahren. Aufgrund der gezielten Herstellung des offenporigen Verbundes der anorganischen Partikel im Grünkörper wird im nachfolgenden Verfahrensschritt, dem Aufbringen des Haftvermittlers, erreicht, dass dieser den Grünkörper im gesamten Flächenbereich jeder einzelnen Schichtstruktur in gleichem Oberflächenabstand penetriert. Ebenso bewirkt die weitgehend gleichmäßige Bindung der anorganischen Partikel untereinander, dass beim Abheben des am Trägermaterial anhaftenden Partikelbelages vom Grünkörper dieser sich im gesamten Flächenbereich jeder Schichtstruktur mit gleicher Partikelbelagdicke ablösen lässt.

Es kann vorgesehen sein, dass die Schüttung entweder durch Einbringen von Mischungen in die Aufnahmeform, denen zuvor Wasser beigemengt wurde, oder nachträglich befeuchtet wird. Hierdurch kann die Rieselfähigkeit der Mischungen ebenso wie das Setzen der Schüttung beeinflusst werden, wobei damit wiederum Laminate mit unterschiedlichen optischen Effekten hergestellt werden können.

Vorteilhaft können als anorganische Partikel gemahlene, natürliche Mineralstoffe verwendet werden, z. B. Sand, Ton, Lehm und/oder Steinkohlenstaub, da diese gut verfügbar und gleichzeitig kostengünstig sind. Dies gilt insbesondere für die Mischungen auf Basis von Sanden, weshalb diese mit Vorteil als mengenmäßig größter Anteil zur Herstellung der Laminate eingesetzt werden.

Ferner kann als Bindemittel ein Zement, Gips oder Kalkmörtel verwendet werden. Diese Bindemittel sind ebenso gut verfügbar und kostengünstig.

Gemäß einer Ausführungsform kann die jeweilige Mischung durch Mischen der anorganischen Partikel mit einem Mengenanteil von 1 bis 2 Gew.-% Bindemittel, z. B. Zement, hergestellt werden. In Verbindung mit dieser Ausführungsform werden vorteilhaft 5 bis 10 Gew.-% Wasser zur Mischung oder Schüttung zugegeben. Dadurch wird für die aus der jeweiligen Mischung erzeugte Schichtstruktur erreicht, dass nach der Trocknung und der Aushärtung diese die Zugfestigkeit von 0,5 bis 10 MPa aufweist. Dies wiederum bewirkt, dass der Haftvermittler den Grünkörper in der jeweiligen Schichtstruktur in gleichmäßigem Oberflächenabstand penetriert und sich folglich für jede Schichtstruktur am Laminat eine gleichmäßige Partikelbelagdicke und - haftung ausbildet. Durch Variation der Zugabe des Bindemittels kann die Partikelbelagdicke so eingestellt werden, dass diese in allen Schichtstrukturen identisch ist, wobei das gesamte Laminat in diesem Fall mit einheitlicher Dicke erzeugt wird. Alternativ kann die Bindemittelzugabe in den verschiedenen Mischungen so gesteuert werden, dass die Penetration des Haftvermittlers in den Grünkörper für verschiedene Schichtstrukturen in unterschiedlichem Oberflächenabstand erfolgt und damit das Laminat beim Abheben unterschiedliche Partikelbelagdicken für die verschiedenen Schichtstrukturen aufweist. Dies ermöglicht neben der farblichen Strukturierung des Laminats zusätzlich die Herstellung eines Reliefeffektes.

In einer Ausbildung der Erfindung kann das Verfahren so durchgeführt werden, dass die Aufnahmeform nach dem Aushärten der Schüttung und der Entstehung des Grünkörpers entfernt und somit eine Arbeitsbehinderung durch die vorhandene Aufnahmeform beim Aufbringen des Trägermaterials vermieden wird. Darüber hinaus bietet dies den Vorteil, dass die Aufnahmeform oder Teile derselben der Wiederverwendung zugeführt werden können.

Gemäß der Erfindung kann vorgesehen sein, die Aufnahmeform mit einer Deckplatte aus transparentem Material zu verwenden. Dies ermöglicht während des Einfüllvorganges die Qualitätskontrolle in Bezug auf das optische Erscheinungsbild der schichtartigen Strukturierung der Schüttung.

In einer Ausbildung der Erfindung kann der Haftvermittler aus Material sein, welches unter ultraviolettem Licht aushärtet. Dies verringert die Abhängigkeit der Aushärtung von Umgebungsbedingungen wie Temperatur und Luftfeuchte und führt zu einer Verkürzung der Prozesszeiten.

Weiterhin können anorganische Partikel mit funktionalen Eigenschaften in die dekorativen Laminate eingebracht werden. Eine solche Funktion kann die Schirmung elektrischer Felder zur Verbesserung der elektromagnetischen Verträglichkeit sein, wobei hierfür vorteilhaft weichferritische Partikel, wie Mangan-Zink-Ferrite oder Nickel-Zink-Ferrite, verwendet werden. Durch Einbringen hartferritischer Partikel, wie z. B. Strontium-Ferrite, Barium-Ferrite oder Cobalt-Ferrite, können Hafteigenschaften für Dauermagnete erzeugt werden. Eine antibakterielle Wirkung und das Verringern von Algen- und Moosbefall kann mit Vorteil durch Verwendung von Kupfer- und Silberpartikeln erreicht werden.

Die Erfindung wird nachfolgend anhand eines Ausführungsbeispiels und mit Bezug auf die schematischen Zeichnungen näher erläutert. Dazu zeigen
- Fig. 1:: die kastenförmige Aufnahmeform beim Vorgang des Einfüllens,
- Fig. 2:: den Grünkörper in der Aufnahmeform, und
- Fig. 3:: den Grünkörper nach dem waagerechten Positionieren und Entfernen der oberen Deckplatte.

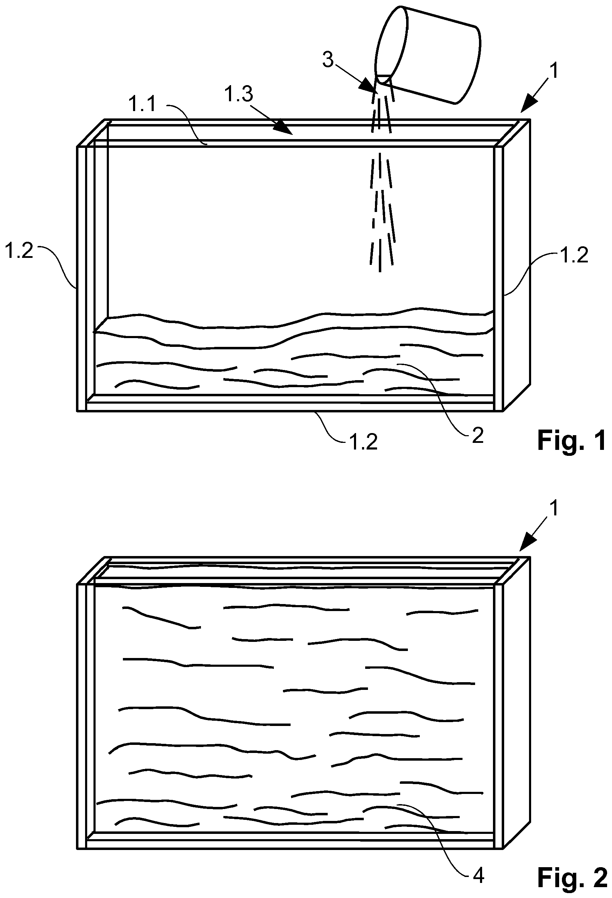

In der Figur 1 ist die kastenförmige Aufnahmeform 1 mit den Seitenwänden 1.2 dargestellt. In die nach oben angeordnete Einfüllöffnung 1.3 der Aufnahmeform 1 wird die Mischung 3 aus den anorganischen Partikeln und dem Bindemittel eingefüllt. Die Prozesskontrolle erfolgt durch die Verwendung der transparenten Deckplatte 1.1 der Aufnahmeform 1.

Die Figur 2 zeigt die Aufnahmeform 1, enthaltend den Grünkörper 4, nach Abschluss des Einfüllvorganges und der Aushärtung.

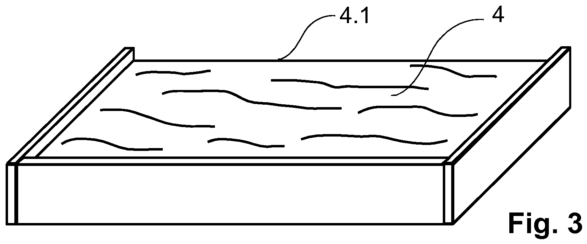

In der Figur 3 ist die Aufnahmeform 1 dargestellt, wobei diese waagerecht positioniert und die Deckplatte 1.1 entfernt wurde, sodass die nach oben angeordnete Deckfläche 4.1 des Grünkörpers 4 und frei zugänglich ist.

### Liste der verwendeten Bezugszeichen

- 1: Aufnahmeform
- 1.1: Deckplatte der Aufnahmeform
- 1.2: Seitenwand der Aufnahmeform
- 1.3: Einfüllöffnung der Aufnahmeform
- 2: Schüttung
- 3: Mischung
- 4: Grünkörper
- 4.1: Deckfläche des Grünkörpers

## Patentansprüche

1. Verfahren zur Herstellung dekorativer Laminate aus verfestigten anorganischen Partikeln, wobei die Partikel nach Maßgabe einer angestrebten schichtartigen Strukturierung auf einem Trägermaterial fixiert werden, aufweisend folgende Verfahrensschritte:
a) Herstellen einer Mehrzahl von Mischungen (3), jeweils aufweisend eine Vielzahl anorganischer Partikel und ein anorganisches, pulverförmiges, wasserabbindendes Bindemittel, wobei für die unterschiedlichen Mischungen (3) jeweils anorganische Partikel unterschiedlicher Farbgebung, Partikelgröße und/oder -form verwendet werden,
b) Herstellen einer feuchten Schüttung (2), aufweisend die schichtartige Strukturierung, wobei ein abwechselndes Einfüllen der Mischungen (3) in eine kastenförmige, senkrecht aufgestellte, nach oben geöffnete Aufnahmeform (1), deren eine Ausdehnung in horizontaler Richtung deutlich kürzer ist als die beiden anderen Ausdehnungen, erfolgt,
c) Trocknen und Aushärten der Schüttung (2) unter Ausbildung eines plattenförmigen Grünkörpers (4), wobei die beiden Deckflächen des Grünkörpers (4) die schichtartige Strukturierung aufweisen,
d) waagerechtes Positionieren der Aufnahmeform (1) mit dem Grünkörper (4) und Entfernen der oberen Deckplatte (1.1),
e) Auflegen eines bahnartigen Trägermaterials auf die obere Deckfläche (4.1) des plattenförmigen Grünkörpers (4),
f) Aufbringen eines, das bahnartige Trägermaterial und den Grünkörper (4) in vorgegebenem Oberflächenabstand penetrierenden, flüssigen Haftvermittlers,
g) Aushärten des Haftvermittlers unter Ausbildung eines am Trägermaterial haftenden Partikelbelages, und
h) Abheben des Trägermaterials mit dem daran haftenden Partikelbelag vom Grünkörper (4) unter Ausbildung des Laminates mit der schichtartigen Strukturierung.

2. Verfahren nach Anspruch 1, **dadurch gekennzeichnet, dass** das Herstellen der feuchten Schüttung (2) durch Einfüllen von befeuchteten Mischungen (3) erfolgt.

3. Verfahren nach Anspruch 1, **dadurch gekennzeichnet, dass** das Herstellen der feuchten Schüttung (2) durch Einfüllen von trockenen Mischungen (3) und anschließendem Befeuchten erfolgt.

4. Verfahren nach einem der Ansprüche 1 bis 3, **dadurch gekennzeichnet, dass** als anorganische Partikel gemahlene, natürliche Mineralstoffe verwendet werden.

5. Verfahren nach Anspruch 4, **dadurch gekennzeichnet, dass** als gemahlener, natürlicher Mineralstoff Sand, Ton, Lehm und/oder Steinkohlenstaub verwendet wird.

6. Verfahren nach einem der Ansprüche 1 bis 5, **dadurch gekennzeichnet, dass** als anorganisches, pulverförmiges, wasserabbindendes Bindemittel Zement, Gips oder Kalkmörtel verwendet wird.

7. Verfahren nach einem der Ansprüche 1 bis 6, **dadurch gekennzeichnet, dass** die Mischungen (3) jeweils einen Mengenanteil von 1 bis 2 Gew.-% anorganisches, pulverförmiges, wasserabbindendes Bindemittel aufweisen.

8. Verfahren nach einem der Ansprüche 1 bis 7, **dadurch gekennzeichnet, dass** die Schüttung (2) durch Zugabe einer Wassermenge von 5 bis 10 Gew.-% der Schüttungsmasse befeuchtet wird.

9. Verfahren nach einem der Ansprüche 1 bis 8, **dadurch gekennzeichnet, dass** eine zerlegbare, plattenförmige Aufnahmeform (1) verwendet wird, wobei die Seitenwände (1.2) der Aufnahmeform (1) nach dem Aushärten des Grünkörpers (4) entfernt oder um 90° abgeklappt werden.

10. Verfahren nach einem der Ansprüche 1 bis 9, **dadurch gekennzeichnet, dass** eine Aufnahmeform (1) mit einer transparenten Deckplatte (1.1) verwendet wird.

11. Verfahren nach einem der Ansprüche 1 bis 10, **dadurch gekennzeichnet, dass** der Haftvermittler UV-sensitiv ist, wobei er durch UV-Beleuchtung ausgehärtet wird.

12. Verfahren nach einem der Ansprüche 1 bis 11, **dadurch gekennzeichnet, dass** in eine oder mehre Mischungen (3) Weichferritpartikel, wie Mangan-Zink-Ferrite oder Nickel-Zink-Ferrite, eingebracht werden.

13. Verfahren nach einem der Ansprüche 1 bis 11, **dadurch gekennzeichnet, dass** in eine oder mehre Mischungen (3) Hartferritpartikel, wie Strontium-Ferrite, Barium-Ferrite oder Cobalt-Ferrite, eingebracht werden.

14. Verfahren nach einem der Ansprüche 1 bis 13, **dadurch gekennzeichnet, dass** in eine oder mehre Mischungen (3) Partikel aus Kupfer oder Silber eingebracht werden.

## Claims

1. A method for producing decorative laminates from solidified inorganic particles,
wherein the particles are fixed on a carrier material according to a sought layer-like structuring,
said method having the following method steps:
a) producing a plurality of mixtures (3), each having multiple inorganic particles and an inorganic powdered water-binding binder, wherein inorganic particles of different colour, particle size and/or shape are used for the different mixtures (3),
b) producing a moist bulk filling (2), having the layer-like structuring, wherein the mixtures (3) are filled alternately into a crate-like, upwardly open receiving form (1) positioned upright, the extent of which in the horizontal direction is much shorter than the two other extents,
c) drying and curing the bulk filling (2) so as to form a planar green body (4), wherein two faces of the green body (4) have the layer-like structuring,
d) horizontally positioning the receiving form (1) with the green body (4) and removing the upper cover plate (1.1),
e) laying a web-like carrier material on the upper face (4.1) of the planar green body (4),
f) applying a liquid adhesion promoter, which penetrates the web-like carrier material and the green body (4) at a predefined surface distance,
g) curing the adhesion promoter so as to form a particle coating that adheres to the carrier material, and
h) raising the carrier material with the particle covering adhering thereto from the green body (4) so as to form the laminate with the layer-like structuring.

2. The method according to claim 1, **characterised in that** the moist bulk filling (2) is produced by pouring in moist mixtures (3).

3. The method according to claim 1, **characterised in that** the moist bulk filling (2) is produced by filling in dry mixtures (3) and then moistening said mixtures.

4. The method according to any one of claims 1 to 3, **characterised in that** ground, natural mineral substances are used as inorganic particles.

5. The method according to claim 4, **characterised in that** sand, clay, loam and/or pulverised coal are/is used as ground natural mineral substance.

6. The method according to any one of claims 1 to 5, **characterised in that** cement, gypsum or lime mortar is used as inorganic, powdered, water-binding binder.

7. The method according to any one of claims 1 to 6, **characterised in that** the mixtures (3) each comprise a proportion of from 1 to 2 % by weight of inorganic powdered water-binding binder.

8. The method according to any one of claims 1 to 7, **characterised in that** the bulk filling (2) is moistened by adding an amount of water of from 5 to 10 % by weight of the bulk filling mass.

9. The method according to any one of claims 1 to 8, **characterised in that** a collapsible, planar receiving form (1) is used, wherein the side walls (1.2) of the receiving form (1) are removed or folded down through 90° once the green body (4) has cured.

10. The method according to any one of claims 1 to 9, **characterised in that** a receiving form (1) with a transparent cover plate (1.1) is used.

11. The method according to any one of claims 1 to 10, **characterised in that** the adhesion promoter is UV-sensitive, wherein it is cured by UV illumination.

12. The method according to any one of claims 1 to 11, **characterised in that** soft ferrite particles, such as manganese zinc ferrites or nickel zinc ferrites, are introduced into one or more mixtures (3).

13. The method according to any one of claims 1 to 11, **characterised in that** hard ferrite particles, such as strontium ferrites, barium ferrites, or cobalt ferrites, are introduced into one or more mixtures (3).

14. The method according to any one of claims 1 to 13, **characterised in that** particles made of copper or silver are introduced into one or more mixtures (3).

## Revendications

1. Procédé destiné à la fabrication de stratifiés décoratifs à base de particules inorganiques solidifiées, où les particules sont fixées sur un matériau support de manière conforme à une structuration en couches recherchée,
présentant les étapes de procédé suivantes :
a) de fabrication d'une majorité de mélanges (3), présentant respectivement une multiplicité de particules inorganiques et un liant inorganique, en forme de poudre, se liant avec de l'eau, où respectivement des particules inorganiques de teintes, de tailles particulaires et/ou de formes diverses sont employées pour les divers mélanges (3),
b) de fabrication d'un lit de particules (2) humide, présentant la structuration en couches, où on procède à un remplissage en alternance des mélanges (3) dans un moule de réception (1) en forme de boîte, posé verticalement, ouvert vers le haut dont l'extension en direction horizontale est nettement plus courte que les deux autres extensions,
c) de séchage et de durcissement du lit de particules (2), moyennant la formation d'un corps de base (4) en forme de plaque, où les deux surfaces de recouvrement du corps de base (4) présentent la structuration en couches,
d) de positionnement horizontal du moule de réception (1) avec le corps de base (4) et de retrait de la plaque de recouvrement (1.1) supérieure,
e) de dépôt d'un matériau support de type bande sur la surface de recouvrement (4.1) supérieure du corps de base (4) en forme de plaque,
f) de dépôt d'un promoteur d'adhésion liquide pénétrant dans le matériau support de type bande et dans le corps de base (4) avec une distance par rapport à la surface prédéterminée,
g) de durcissement du promoteur d'adhésion moyennant la formation d'une couverture de particules adhérant sur le matériau support, et
h) de retrait du matériau support avec la couverture de particules y adhérant du corps de base (4), moyennant la formation du stratifié avec la structuration en couches.

2. Procédé selon la revendication 1, **caractérisé en ce que** la fabrication du lit de particules (2) humide a lieu par un déversement de mélanges (3) humidifiés.

3. Procédé selon la revendication 1, **caractérisé en ce que** la fabrication du lit de particules (2) humide a lieu par un déversement de mélanges (3) secs et une humidification ultérieure.

4. Procédé selon l'une des revendications 1 à 3, **caractérisé en ce qu'**en tant que particules inorganiques broyées, on emploie des produits minéraux naturels.

5. Procédé selon la revendication 4, **caractérisé en ce qu'**en tant que produit minéral naturel broyé, on emploie du sable, de la terre, de l'argile et/ou de la poussière de charbon.

6. Procédé selon l'une des revendications 1 à 5, **caractérisé en ce qu'**en tant que liant inorganique, sous forme de poudre, se liant avec de l'eau, on emploie du ciment, du plâtre ou du mortier de chaux.

7. Procédé selon l'une des revendications 1 à 6, **caractérisé en ce que** les mélanges (3) présentent respectivement une proportion de 1 à 2 % en poids de liant inorganique sous forme de poudre se liant avec de l'eau.

8. Procédé selon l'une des revendications 1 à 7, **caractérisé en ce que** le lit de particules (2) est humidifié par l'apport d'une quantité d'eau de 5 à 10 % en poids de la masse du lit de particules.

9. Procédé selon l'une des revendications 1 à 8, **caractérisé en ce qu'**on emploie un moule de réception (1), en forme de plaque, démontable, où les parois latérales (1.2) du moule de réception (1) sont enlevées ou rabattues de 90 ° après le durcissement du corps de base (4).

10. Procédé selon l'une des revendications 1 à 9, **caractérisé en ce qu'**on emploie un moule de réception (1) avec une plaque de recouvrement (1.1) transparente.

11. Procédé selon l'une des revendications 1 à 10, **caractérisé en ce que** le promoteur d'adhésion est sensible au rayonnement UV, ce par quoi il est durci par une illumination par des rayons UV.

12. Procédé selon l'une des revendications 1 à 11, **caractérisé en ce que** dans un ou plusieurs mélanges (3), on incorpore des particules d'un ferrite doux, comme le ferrite de manganèse-zinc ou le ferrite de nickel-zinc.

13. Procédé selon l'une des revendications 1 à 11, **caractérisé en ce que** dans un ou plusieurs mélanges (3) on incorpore des particules d'un ferrite dur, comme le ferrite de strontium, le ferrite de baryum ou le ferrite de cobalt.

14. Procédé selon l'une des revendications 1 à 13, **caractérisé en ce que** dans un ou plusieurs mélanges (3), on incorpore des particules à base de cuivre ou d'argent.
